# FASCICULE DE BREVET EUROPEEN

(11) **EP 0 835 773 B1**
(45) Date de publication et mention de la délivrance du brevet: **31.07.2002**
(21) Numéro de dépôt: 97117434.7
(22) Date de dépôt: 09.10.1997
(51) Int. Cl.: B60H 1/00

(54) **Dispositif de chauffage-climatisation de véhicule avec réglage séparé des côtés droit et gauche de l'habitacle**
Heizungs- und/oder Klimaanlage für einem Fahrzeuginnenraum mit getrennter linksseitigen und rechtseitigen Regelung
Heating and/or air conditioning system for a vehicle with separate control for the left and right side of the interior

(30) Priorité: 11.10.1996 FR 9612448
(43) Date de publication de la demande: 15.04.1998
(73) Titulaire: VALEO CLIMATISATION, 78321 La Verrière (FR)
(72) Inventeur: Breton, Michel, 78120 Rambouillet (FR); Jacquet, Michel, 78320 Le Mesnil Saint Denis (FR)

(56) Documents cités:
- EP-A- 0 289 405
- DE-A- 4 400 810
- DE-A- 4 422 120
- FR-A- 2 532 739

## Description

L'invention concerne un dispositif de chauffage-climatisation de l'habitacle d'un véhicule comme montre par exemple dans le document DE4422120.

Le dispositif de l'invention est du type comprenant un boîtier délimitant une partie amont alimentée en air froid et logeant un radiateur de chauffage, ainsi qu'une partie aval divisée par une cloison médiane en deux moitiés, droite et gauche, alimentées chacune par de l'air chaud en provenance du radiateur de chauffage et affectées respectivement au chauffage d'un côté droit et d'un côté gauche de l'habitacle, sous le contrôle de moyens de réglage.

On connaît déjà des dispositifs de ce genre qui permettent de régler séparément la température des flux d'air envoyés respectivement du côté droit et du côté gauche de l'habitacle, ce qui permet de procurer un meilleur confort aérothermique aux passagers du véhicule. Les flux d'air provenant respectivement des moitiés droite et gauche de la partie aval du boîtier sont alors envoyés vers des buses de sortie correspondantes placées en différentes régions de l'habitacle. Ces buses comprennent habituellement des buses de dégivrage/désembuage du pare-brise, des buses d'aération placées sur la planche de bord et des buses placées en partie inférieure de l'habitacle et dirigées vers les pieds des passagers.

Dans les dispositifs connus de ce type, le radiateur de chauffage est un radiateur double, c'est-à-dire un radiateur comportant deux parties à réglage séparé de température, propres à être traversées par deux flux d'air différents qui sont envoyés ensuite dans les moitiés droite et gauche de la partie aval du boîtier.

Habituellement, le radiateur double est un radiateur à circulation de fluide chaud, lequel est parcouru généralement par le liquide de refroidissement du moteur. Il faut alors prévoir deux vannes, habituellement une vanne hacheuse double, pour régler séparément le débit du fluide chaud dans les deux moitiés du radiateur et permettre ainsi le réglage indépendant du flux d'air envoyé dans les côtés droit et gauche de l'habitacle.

Cette solution connue nécessite donc l'utilisation de deux vannes et de trois tubulures de circulation du fluide chaud, à savoir deux tubulures d'entrée reliées respectivement aux deux moitiés du radiateur, et une tubulure de sortie, commune aux deux moitiés du radiateur.

L'invention a pour but de simplifier la construction d'un tel dispositif de chauffage-climatisation.

Elle propose à cet effet un dispositif de chauffage-climatisation de l'habitacle d'un véhicule comportant un boîtier délimitant une partie amont alimentée en air froid et logeant un seul radiateur de chauffage parcouru par un fluide chaud et s'étendant transversalement , ainsi qu'une partie aval divisée par une cloison médiane en deux moitiés droite et gauche alimentées chacune par de l'air chaud en provenance du radiateur de chauffage et affectées respectivement au chauffage d'un côté droit et d'un côté gauche de l'habitacle, sous le contrôle de moyens de réglage Selon l'invention, le boîtier comporte deux canaux d'air froid faisant communiquer la partie amont avec respectivement les moitiés droite et gauche de la partie aval, tandis que le radiateur de chauffage comporte une vanne de réglage du débit du fluide chaud pour régler la température de l'air provenant du radiateur et que les moyens de réglage sont prévus pour contrôler séparément les flux d'air froid dans les deux canaux d'air froid et régler ainsi séparément la température de l'air dans les moitiés droite et gauche du boîtier

On peut ainsi procurer un réglage séparé de l'air dans les moitiés droite et gauche du boîtier, et donc dans les côtés droit et. gauche de l'habitacle, en mélangeant à chaque fois un flux d'air chaud provenant du radiateur de chauffage avec un flux d'air froid, en proportion réglable, provenant de la partie amont du boîtier, laquelle est alimentée en air froid

L'invention permet d'utiliser un seul radiateur au lieu d'un radiateur double.

Comme. il s'agit habituellement d'un radiateur du type à circulation de fluide, le réglage de la température du radiateur peut être obtenu par une seule vanne, au lieu d'une vanne hacheuse double comme dans la technique antérieure.

En outre, le radiateur simple de l'invention est raccordé seulement à deux tubulures, respectivement pour l'entrée et la sortie du fluide caloporteur chaud, au lieu de trois tubulures, comme dans la technique antérieure.

Dans une première forme de réalisation de l'invention, les deux canaux d'air froid sont disposés symétriquement par rapport au plan que définit la cloison médiane.

Ces deux canaux sont avantageusement formés chacun dans deux parois latérales, respectivement droite et gauche, du boîtier, qui s'étendent dans une direction généralement verticale, de part et d'autre de la cloison médiane.

Dans une autre forme de réalisation de l'invention, les deux canaux d'air froid sont disposés respectivement en partie supérieure et en partie inférieure du boîtier.

Ces deux canaux sont avantageusement formés respectivement dans une paroi supérieure et une paroi inférieure du boîtier, qui s'étendent toutes deux dans une direction généralement horizontale, perpendiculairement au plan que définit la cloison médiane.

Les moyens de réglage comprennent avantageusement deux volets logés respectivement dans les deux canaux d'air froid.

Ces deux volets, qui sont commandés séparément, sont avantageusement réalisés sous la forme de volets pivotants du type drapeau.

Le radiateur de chauffage de l'invention est avantageusement un radiateur du type parcouru par un fluide chaud et comporte une vanne de réglage du débit du fluide chaud.

Bien que la partie amont du boîtier puisse être alimentée par de l'air froid provenant de l'extérieur, il est préférable que le boîtier loge un évaporateur de climatisation situé en amont du radiateur de chauffage.

Ceci permet d'obtenir un intervalle de température plus étendu dans les moitiés droite et gauche de la partie aval du boîtier, tout en permettant un écart de température plus important entre ces deux moitiés.

Selon une autre caractéristique de l'invention, le dispositif comprend une sonde de température logée dans l'une au moins des moitiés droite et gauche de la partie aval du boîtier.

En effet, le dispositif peut fonctionner avec une seule sonde de température.

Dans la description qui suit, faite seulement à titre d'exemple, on se réfère aux dessins annexés, sur lesquels :
- la figure 1 est une vue en coupe longitudinale d'un dispositif de chauffage-climatisation de l'habitacle d'un véhicule automobile selon l'invention;
- la figure 2 est une vue en coupe selon la ligne II-II de la figure 1;
- la figure 3 est une vue en coupe selon la ligne III-III de la figure 2; et
- la figure 4 est une vue analogue à la figure 2, dans une variante de réalisation.

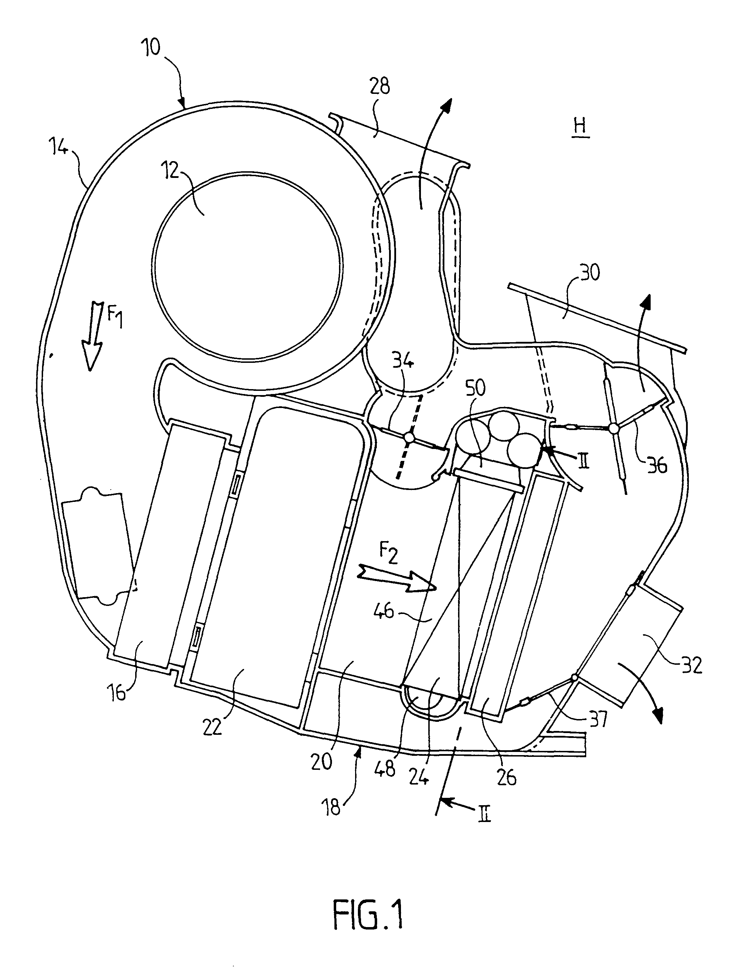

Le dispositif représenté à la figure 1 comprend un groupe moto-ventilateur 10 constitué d'une turbine 12 entraînée en rotation à l'intérieur d'une enceinte 14 en forme de volute pour pulser un flux d'air F1 provenant de l'extérieur de l'habitacle H d'un véhicule automobile et/ou de l'intérieur de cet habitacle.

L'enceinte 14 est munie, à sa sortie, d'un filtre 16 et elle est raccordée à l'entrée d'un boîtier 18 comportant une partie amont 20 logeant un évaporateur 22 faisant partie d'un circuit de climatisation, ainsi qu'un radiateur de chauffage 24.

Ainsi, le flux d'air F1 préalablement filtré traverse successivement l'évaporateur 22 pour y être refroidi et le radiateur 24 pour y être réchauffé. Le boîtier 18 comporte en outre une partie aval 26 propre à être alimentée par de l'air provenant du radiateur de chauffage 24. Cet air est ensuite distribué entre des buses 28 de dégivrage/désembuage du pare-brise du véhicule, des buses d'aération 30 placées sur la planche de bord du véhicule et des buses de sortie basse 32 propres à envoyer de l'air vers la partie inférieure de l'habitacle, c'est-à-dire vers les pieds des passagers. Le flux d'air dirigé vers les buses 28 est contrôlé par un volet 34 tandis que l'air envoyé vers les buses 30 est contrôlé par un volet 36 et l'air envoyé par les buses 32 est contrôlé par un volet 37. La structure générale du dispositif, telle qu'elle vient d'être décrite jusqu'à présent, est généralement connue.

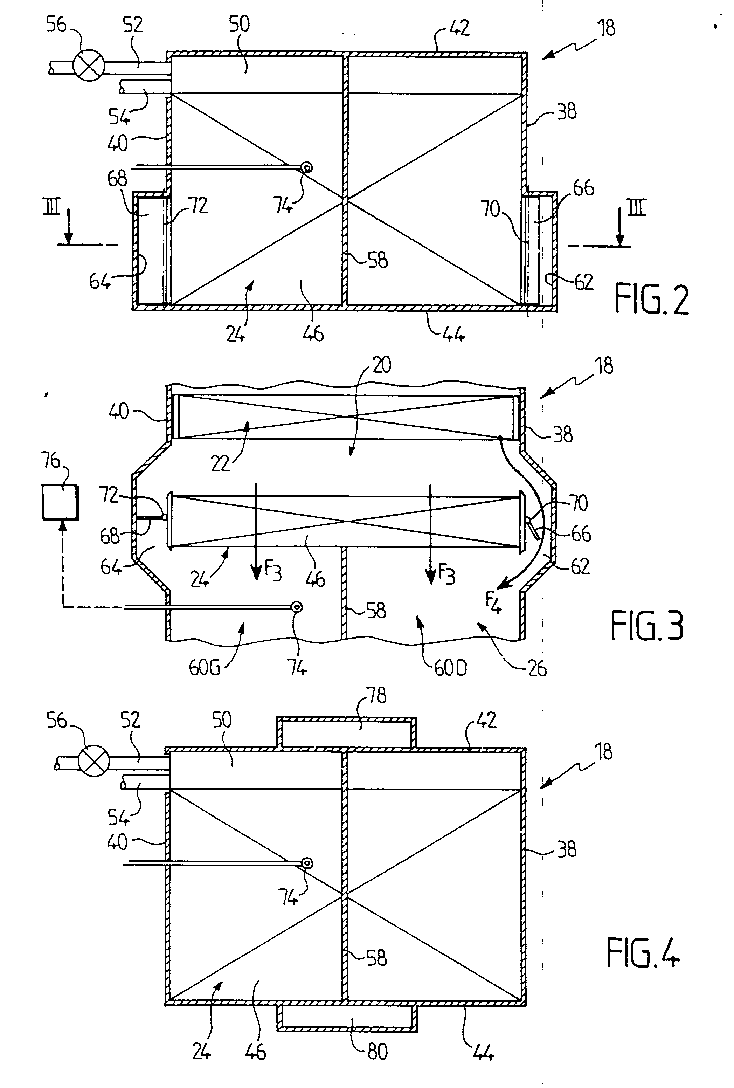

Comme on le voit plus particulièrement sur la figure 2, le boîtier 18 est délimité par deux parois latérales 38 et 40, espacées l'une de l'autre, s'étendant dans une direction générale verticale, et disposées respectivement du côté droit et du côté gauche de l'habitacle H du véhicule. Le boîtier est en outre délimité par une paroi supérieure 42 et une paroi inférieure 44, toutes deux à disposition générale horizontale.

Le radiateur de chauffage 24 est disposé transversalement dans le boîtier de manière à occuper tout l'espace délimité par les parois 38, 40, 42 et 44. Le radiateur 24 (figures 1 et 2) comporte un corps 46 formé d'un faisceau de tubes en épingle ou en U 48 (figure 1) traversant une multiplicité d'ailettes. Le corps 46 est relié à une boîte à fluide 50 reliée à deux tubulures 52 et 54 servant respectivement à l'entrée et à la sortie d'un fluide caloporteur parcourant les tubes 48. Le fluide caloporteur est avantageusement constitué par le liquide servant au refroidissement du moteur du véhicule. Une vanne de réglage 56 est montée sur la tubulure d'entrée 52 pour permettre le réglage du débit du fluide caloporteur et, par conséquent, la température de l'air en sortie du radiateur.

La partie aval 26 du boîtier 18 comporte une cloison médiane 58 (figures 1 et 2) qui s'étend dans un plan généralement vertical et qui est située à mi-distance des parois latérales 38 et 40, tout en reliant les parois 42 et 44. La partie aval 26 est ainsi divisée en deux moitiés 60D et 60G affectées respectivement à des buses situées du côté droit et du côté gauche de l'habitacle.

Pour permettre le réglage de la température de l'air dans les moitiés 60D et 60G, de façon séparée, le dispositif de l'invention comporte des moyens pour régler, de façon séparée, la température de l'air dans les moitiés 60D et 60G. Pour cela, le boîtier délimite latéralement deux canaux 62, 64 formés respectivement par des élargissements des parois latérales 38 et 34 dans la région de la jonction entre les parties amont et aval, c'est-à-dire dans la région du radiateur 24.

Les canaux 62 et 64 sont contrôlés respectivement par deux volets 66 et 68 (figures 1 et 2) qui, dans l'exemple, sont des volets du type drapeau, montés chacun pivotants autour d'un axe 70, 72. Dans la position représentée sur la figure 3, le volet 66 est ouvert, tandis que le volet 68 est fermé. Il en résulte que la moitié droite 60D est alimentée à la fois par un flux d'air chaud F3 provenant du radiateur 24 et par un flux d'air froid F4 provenant du canal 62. Dans la position de la figure 3, le canal 64 est fermé, si bien que la moitié 60G est alimentée uniquement par un flux d'air chaud F3 provenant du radiateur 24.

Il en résulte que la température du flux d'air dans la moitié 60D est inférieure à celle du flux d'air dans la partie 60G. Une sonde de température 74 (figures 2 et 3) est logée dans la moitié gauche 60G et est reliée à un organe de commande 76 propre à contrôler la vanne 56 ainsi que les volets 66 et 68 en fonction d'ordres de commande donnés par l'utilisateur du véhicule.

En outre, chacune des moitiés 60D et 60G peut être alimentée de façon séparée par un flux d'air à température réglable résultant d'un flux d'air à température réglable provenant du radiateur qui est mélangé, le cas échéant, avec un flux d'air froid provenant de la partie amont et ayant au préalable traversé l'évaporateur.

On se réfère maintenant à la figure 4 qui représente une variante de réalisation dans laquelle le boîtier comporte deux canaux d'air froid 78 et 80 reliant la partie amont 20 du boîtier respectivement avec les moitiés 60D et 60G de la partie aval. Les canaux 78 et 80 jouent les fonctions respectives des canaux 62 et 64. Toutefois, les canaux 78 et 80 sont placés, non pas sur les parois latérales, mais respectivement sur la paroi supérieure 42 et la paroi inférieure 44 du boîtier 18. Les canaux 78 et 80 sont contrôlés séparément par des volets (non représentés).

Le dispositif de l'invention permet de faire varier la température du côté droit et du côté gauche, depuis une température minimale qui peut être de l'ordre de 5°C à la sortie de l'évaporateur, jusqu'à une température maximale qui peut être de l'ordre de 65°C. On peut ainsi obtenir un écart de température important entre les moitiés droite et gauche, cet écart étant largement supérieur à l'écart généralement demandé qui atteint habituellement une différence de quelques °C.

Comme déjà indiqué, le dispositif de l'invention est d'une structure simplifiée puisqu'il comporte un radiateur simple au lieu d'un radiateur double, une vanne de réglage simple au lieu d'une vanne double, et deux tubulures de circulation de fluide, au lieu de trois tubulures, raccordées au radiateur.

Bien entendu, l'invention n'est pas limitée aux formes de réalisation décrites précédemment à titre d'exemple et s'étend à d'autres variantes.

Par ailleurs, il pourrait être envisagé de supprimer l'évaporateur, bien que, en pareil cas, un intervalle de température susceptible d'être obtenu dans chacune des moitiés droite et gauche serait beaucoup plus limité.

## Revendications

1. Dispositif de chauffage-climatisation de l'habitacle d'un véhicule comportant un boîtier (18) délimitant une partie amont (20) alimentée en air froid et logeant un seul radiateur de chauffage (24) parcouru par un fluide chaud et s'étendant transversalement, ainsi qu'une partie aval(26) divisée par une cloison médiane (58) en deux moitiés droite et gauche (60D,60G), alimentées chacune par de l'air chaud en provenance du radiateur de chauffage et affectées respectivement au chauffage d'un côté droit et d'un côté gauche de l'habitacle (H), sous le contrôle de moyens de réglage (66,68), le boîtier comportant deux canaux d'air froid (62,64;78,80) faisant communiquer la partie amont avec respectivement les moitiés droite et gauche (60D,60G) de la partie aval (26), **caractérisé en ce que** le radiateur de chauffage (24) comporte une vanne de réglage (56) du débit du fluide chaud pour régler la température de l'air provenant du radiateur et **en ce que** les moyens de réglage (66,68) sont prévus pour contrôler séparément les flux d'air froid dans les deux canaux d'air froid et régler ainsi séparément la température de l'air dans les moitiés droite et gauche du boîtier

2. Dispositif selon la revendication 1, **caractérisé en ce que** les deux canaux (62,64) sont disposés symétriquement par rapport au plan que définit la cloison médiane.

3. Dispositif selon la revendication 2, **caractérisé en ce que** les deux canaux (62,64) sont formés chacun dans deux parois latérales (38,40), respectivement droite et gauche, du boîtier (18), qui s'étendent dans une direction généralement verticale, de part et d'autre de la cloison médiane (58).

4. Dispositif selon la revendication 1, **caractérisé en ce que** les deux canaux (78,80) sont disposés respectivement en partie supérieure et en partie inférieure du boîtier (18).

5. Dispositif selon la revendication 4, **caractérisé en ce que** les deux canaux (78,80) sont formés respectivement dans une paroi supérieure (42) et une paroi inférieure (44) du boîtier (18), qui s'étendent toutes deux dans une direction généralement horizontale, perpendiculairement au plan que définit la cloison médiane (58).

6. Dispositif selon l'une des revendications 1 à 5, **caractérisé en ce que** les moyens de réglage comprennent avantageusement deux volets (66,68) logés respectivement dans les deux canaux d'air froid (62 ,64).

7. Dispositif selon la revendication 6, **caractérisé en ce que** les deux volets (66,68) sont des volets pivotants de type drapeau.

8. Dispositif selon l'une des revendications 1 à 7, **caractérisé en ce que** la partie amont (20) du boîtier (18) loge un évaporateur de climatisation (22) situé en amont du radiateur de chauffage (24).

9. Dispositif selon l'une des revendications 1 à 8, **caractérisé en ce qu'**il comprend une sonde de température (74) logée dans l'une au moins des moitiés droite ou gauche (60D,60G) de la partie aval du boîtier (18).

## Patentansprüche

1. Fahrzeuginnenraumheiz-/ -klimaanlage, umfassend ein Gehäuse (18), welches einen flußaufwärtsliegenden Teil (20) begrenzt, der mit Frischluft versorgt wird und einen einzelnen Heizkörper (24) aufnimmt, der von einem warmen Fluid durchlaufen wird und sich transversalwärts erstreckt, sowie einen flußabwärtsliegenden Teil (26), der durch eine mittlere Trennwandung (58) in zwei Hälften, eine rechte und eine linke (60D, 60G) unterteilt ist, jeweils versorgt mit warmer Luft, ausgehend von dem Heizkörper, und jeweils erwärmt für eine rechte und eine linke Seite des Innenraumes (H) unter der Steuerung einer Steuereinrichtung (66, 68), wobei das Gehäuse zwei Frischluftkanäle (62, 64; 78, 80) umfaßt, die den flußaufwärtsliegenden Teil mit jeweils den rechten und linken Hälften (60D, 60G) des flußabwärtsliegenden Teiles (26) in Verbindung setzen, **dadurch gekennzeichnet, daß** der Heizkörper (24) ein Steuer- oder Regelventil (56) bezüglich des Durchsatzes an warmem Fluid enthält, um die Temperatur der Luft, ausgehend von dem Heizkörper zu steuern, und daß die Steuereinrichtung (66, 68) vorgesehen ist, um separat die Frischluftströmungen in den zwei Frischluftkanälen zu steuern und somit in separater Weise die Temperatur der Luft in den rechten und linken Hälften des Gehäuses.

2. Anlage nach Anspruch 1, **dadurch gekennzeichnet, daß** die zwei Kanäle (62, 64) symmetrisch angeordnet sind mit Bezug auf die von der mittleren Trennwandung definierte Ebene.

3. Anlage nach Anspruch 2, **dadurch gekennzeichnet, daß** die zwei Kanäle (62, 64) jeweils in zwei Lateralwandungen (38, 40) ausgebildet sind, und zwar jeweils rechts und links von dem Gehäuse (18), wobei sie eine generell vertikale Erstreckung beidseitig der mittleren Trennwandung (58) aufweisen.

4. Anlage nach Anspruch 1, **dadurch gekennzeichnet, daß** die zwei Kanäle (78, 80) jeweils in einem oberen Abschnitt und einem unteren Abschnitt des Gehäuses (18) angeordnet sind.

5. Anlage nach Anspruch 4, **dadurch gekennzeichnet, daß** die zwei Kanäle (78, 80) jeweils in einer oberen Wandung (42) und einer unteren Wandung (44) des Gehäuses (18) ausgebildet sind, sich beide in einer generell horizontalen Richtung senkrecht zur von der mittleren Trennwandung (58) definierten Ebene erstreckend.

6. Anlage nach einem der Ansprüche 1 bis 5, **dadurch gekennzeichnet, daß** die Steuereinrichtung vorteilhafterweise zwei Klappen (66, 68) umfaßt, jeweils aufgenommen in den zwei Frischluftkanälen (62, 64).

7. Anlage nach Anspruch 6, **dadurch gekennzeichnet, daß** die zwei Klappen (66, 68) schwenkbare Klappen vom Fahnentyp sind.

8. Anlage nach einem der Ansprüche 1 bis 7, **dadurch gekennzeichnet, daß** der flußaufwärtsliegende Teil (20) des Gehäuses (18) einen Klimatisierungsverdampfer (22) aufnimmt, sich flußaufwärtsliegend des Heizkörpers (24) befindend.

9. Anlage nach einem der Ansprüche 1 bis 8, **dadurch gekennzeichnet, daß** sie einen Temperatursensor (74) umfaßt, aufgenommen in zumindest einer der rechten und linken Hälften (60D, 60G) des flußabwärtsliegenden Teiles des Gehäuses (18).

## Claims

1. Device for the heating/air conditioning of the passenger compartment of a vehicle comprising a casing (18) delimiting an upstream part (20) fed with cold air and housing a single heating radiator (24) through which a hot fluid runs and extending transversely, and a downstream part (26) divided by a middle partition (58) into two right and left halves (60D, 60G), each supplied with hot air coming from the heating radiator and allocated respectively to the heating of a right-hand side and left-hand side of the passenger compartment (H), under the control of regulation means (66, 68), the casing comprising two cold-air channels (62, 64; 78, 80) causing the upstream part to communicate with respectively the right-hand and left-hand halves (60D, 60G) of the downstream part (26), **characterised in that** the heating radiator (24) has a valve (56) for regulating the flow of hot fluid in order to regulate the temperature of the air coming from the radiator and **in that** the regulation means (66, 68) are designed to separately control the cold-air flows in the two cold-air channels and thus separately regulate the temperature of the air in the right and left halves of the casing.

2. Device according to Claim 1, **characterised in that** the two channels (62, 64) are disposed symmetrically with respect to the plane which defines the middle partition.

3. Device according to Claim 2, **characterised in that** the two channels (62, 64) are each formed in two side walls (38, 40), respectively right and left, of the casing (18), which extend in a generally vertical direction, on each side of the middle partition (58).

4. Device according to Claim 1, **characterised in that** the two channels (78, 80) are disposed respectively in the top part and the bottom part of the casing (18).

5. Device according to Claim 4, **characterised in that** the two channels (78, 80) are formed respectively in a top wall (42) and a bottom wall (44) of the casing (18), which both extend in a generally horizontal direction, perpendicular to the plane which defines the middle partition (58).

6. Device according to one of Claims 1 to 5, **characterised in that** the regulation means advantageously comprise two flaps (66, 68) housed respectively in the two cold-air channels (62, 64).

7. Device according to Claim 6, **characterised in that** the two flaps (66, 68) are pivoting flaps of the flag type.

8. Device according to one of Claims 1 to 7, **characterised in that** the upstream part (20) of the casing (18) houses an air-conditioning evaporator (22) situated upstream of the heating radiator (24).

9. Device according to one of Claims 1 to 8, **characterised in that** it comprises a temperature sensor (74) housed in at least one of the right-hand or left-hand halves (60D, 60G) of the downstream part of the casing (18).
